# EUROPÄISCHE PATENTANMELDUNG

(11) **EP 3 889 002 A1**
(43) Veröffentlichungstag der Anmeldung: **06.10.2021**
(21) Anmeldenummer: 21166051.9
(22) Anmeldetag: 30.03.2021
(51) Int. Cl.: B62B 5/06, E05B 1/00

(54) **SCHUTZGRIFF**

(30) Priorität: 30.03.2020 DE 102020108801; 30.03.2020 DE 202020101705 U
(71) Anmelder: Gautzsch, Alexandra, 16837 Luhme (DE)
(72) Erfinder: Gautzsch, Alexandra, 16837 Luhme (DE)
(74) Vertreter: Kirschner, Sebastian

(57) **Zusammenfassung**

Die Erfindung betrifft einen Schutzgriff (1) mit einer ersten Griffschale (2), mit einer zweiten Griffschale (3) und mit einem Verschluss (8), wobei die Griffschalen (2, 3) über einen Verbindungsbereich (4) schwenkbeweglich miteinander verbunden sind, wobei die Griffschalen (2, 3) zwei freie Längskantenbereiche (9, 10) aufweisen, welche in einem geöffneten Zustand des Schutzgriffes (1) eine Maulöffnung zum Umgreifen von einem Gegenstand wie von einer Einkaufwagenschiebestange oder einer Türklinke bilden, wobei die beiden Griffschalen (2, 3) in einem geschlossenen Zustand eine Aufnahme (5) zum Umgreifen des Gegenstandes begrenzen, wobei in einem geschlossenen Zustand die Längskantenbereiche (9, 10) über den Verschluss (8) miteinander verbunden sind.

Die Gefahren durch Viren, Keime und Bakterien sind für den Benutzer dadurch verringert, dass zumindest eine der Griffschalen (2, 3) einen ersten Endbegrenzungskragen (6) und einen zweiten Endbegrenzungskragen (7) aufweist, wobei zwischen den beiden Endbegrenzungskragen (6, 7) ein Griffbereich ausgebildet ist und der Durchmesser des Schutzgriffes (1) im Griffbereich kleiner als der Durchmesser des Schutzgriffes (1) an den Endbegrenzungskragen (6, 7) ist.

## Beschreibung

Die Erfindung betrifft einen Schutzgriff mit den Merkmalen des Oberbegriffs des Patentanspruches 1.

Anzufassende Gegenstände können Viren und Bakterien aufweisen. Es ist bekannt, dass Einkaufswagen und die Handgriffe von Einkaufswagen mit Viren, Bakterien und Keimen belastet sind. Selbst wenn der Einkaufswagen mit einem Reinigungskonzentrat gereinigt wird, ist schon nach der Benutzung durch wenige Kunden der Einkaufswagen schon wieder verschmutzt bzw. bakteriell oder mit Viren behaftet. Einkaufswagen können eine Quelle von Keimen, Viren und Bakterien sein. Es könnten Grippeviren über die Einkaufswagen und besonders über deren Einkaufswagenschiebestangen übertragen werden. Es ist bekannt, die Schiebestangen mit einem Kunststoffrohr aus einem selbstreinigenden Kunststoff herzustellen. Das Kunststoffrohr soll bewirken, dass evtl. vorhandene Keime oder Bakterien oder Viren abgetötet werden. Die Entwicklung und Herstellung von solchen Einkaufswagen mit selbstreinigenden Kunststoffen sind aufwendig und teuer. Die Kunden von Supermärkten laufen Gefahr, sich an den bekannten Einkaufswagen entsprechend zu infizieren.

Ferner besteht eine Gefahr des Kontaktes mit Viren, Keimen oder Bakterien, wenn eine Türklinke oder sonstige Gegenstände im öffentlichen Raum gegriffen werden müssen. Der Schutzgriff dient dem kontaktlosen Umgreifen und Bedienen/ Benutzen von Einkaufswagenschiebestangen, Türklinken. Der Schutzgriff umgibt dabei den dafür vorgesehenen Schiebestangen-Griffbereich oder den Griffbereich der Türklinke in der geschlossenen Anwendung wie eine Manschette, wobei der Benutzer nur mit den Außenseiten des Schutzgriffes beim Benutzen/Bedienen dieser Gegenstände in Kontakt kommt, nicht aber mit dem Gegenstand selber.

Aus der gattungsbildenden DE 299 01 864 U1 ist ein Schutzgriff mit einer ersten und einer zweiten Griffschale bekannt, wobei die Griffschalen aus einer biegsamen Ummantelung bestehen und über einen nicht näher beschriebenen Verschluss miteinander in einem geschlossenen Zustand verbindbar sind. Der Verschluss ist an den freien Längskanten der Ummantelung angeordnet bzw. ausgebildet. Die Ummantelung dient zur Ummantelung von Einkaufschiebestangen oder Schiebestangen von Transportwagen. Die Ummantelung weist in einer Ausgestaltung eine Aussparung für eine Pfandvorrichtung eines Einkaufswagens auf.

Aus der DE 10 2018 006 739 A1 ist ein Hygienegriff aus Kunststoff für einen Einkaufswagen bekannt. Der Hygienegriff weist zwei Griffe auf, die über einen Bügel miteinander verbunden sind. Der Bügel wird mit einem Schloss an einem Münzpfandmodul verbunden. Das Münzpfandmodul weist dazu eine Bügelrinne auf, die stabil am Einkaufwagen befestigt ist. Mit dem Schloss wird der Bügel verriegelt und mit einem Schieber, einem Drehknopf oder einem Hebel geöffnet.

Aus der US 6,981,707 B1 ist ein Schutzgriff für einen Einkaufswagen bekannt, wobei der Schutzgriff teleskopierbar ist und an beiden Enden einen aufragenden Endbegrenzungskragen aufweist.

Aus der DE 298 07 341 U1 ist ein Hygienegriff in Form eines geschlitzten Hohlzylinders bekannt. Um den geschlitzten Hohlzylinder öffnen zu können, ist auf der dem Schlitz gegenüberliegenden Seite ein Folienscharnier angeordnet.

Aus der DE 10 2012 204 007 A1 ist eine Handgriffvorrichtung für einen Einkaufswagen mit Endbegrenzungskragen bekannt.

Auf weiteren Stand der Technik US 8 875 351 B1, US 2015/ 0298 313 A1 und US 2014 / 0173 867 A1 wird hinsichtlich von Schutzgriffen zum Gebrauch an Türklinken verwiesen.

Der Erfindung liegt daher die Aufgabe zugrunde, einen Schutzgriff für einen Einkaufswagen und/oder für Türklinken derart auszugestalten und weiterzubilden, so dass die Gefahren durch Viren, Keime und Bakterien beim Einkaufen mit einem Einkaufswagen oder beim Greifen von anderen Gegenständen für den Benutzer verringert sind.

Diese Aufgabe wird nun durch einen Schutzgriff mit den Merkmalen des Patentanspruches 1 gelöst.

Der Schutzgriff weist eine erste Griffschale, eine zweite Griffschale und einen Verschluss auf, wobei die Griffschalen über einen Verbindungsbereich schwenkbeweglich miteinander verbunden sind, wobei die Griffschalen zwei freie Längskantenbereiche aufweisen, wobei die freien Längskantenbereiche in einem geöffneten Zustand des Schutzgriffes eine Maulöffnung zum Umgreifen von einem Gegenstand, insbesondere zum Umgreifen von einer Einkaufwagenschiebestange oder einer Türklinke, bilden, wobei in einem geschlossenen Zustand die Längskantenbereiche über den Verschluss miteinander verbunden sind. Der Verschluss ist an der ersten Griffschale angeordnet und wirkt mit der zweiten Griffschale zusammen. Der Schutzgriff mit den beiden Griffschalen bildet eine öffenbare und schließbare Manschette. Zum Umgreifen des Gegenstandes werden die Griffschalen auseinandergeschwenkt, so dass die Maulöffnung entsteht und soweit geöffnet wird, bis der Gegenstand von den Griffschalen umfasst werden kann. Die Griffschalen werden danach aufeinander zu geschwenkt, bis der Verschluss geschlossen werden kann. Durch Schließen des Verschlusses wird verhindert, dass der Schutzgriff sich ungewollt öffnet. Der Benutzer kommt beim Greifen eines Gegenstandes nur mit den Außenseiten des Schutzgriffes in Verbindung, nicht aber mit dem Gegenstand selber. Daher ist der Benutzer vor dem direkten Kontakt mit Viren oder Bakterien geschützt.

Der Schutzgriff dient dem Schutz der Hände vor diesen Viren, Bakterien und Keimen, denn man fasst sich oft mit den Händen ins Gesicht, zum Beispiel beim Essen, Trinken oder Rauchen. Der Schutzgriff minimiert somit das Risiko, sich mit gefährlichen Krankheiten zu infizieren enorm. Der Benutzer greift / umgreift und bedient / benutzt die oben genannten Gegenstände, wenn er den Schutzgriff einsetzt, kontaktlos. Der Benutzer öffnet dazu den Schutzgriff mit beiden Händen, legt ihn mit der Maulöffnung, die so an den offenen Längskantenbereichen entsteht, auf den Einkaufswagenschiebestangengriffbereich, führt dann die beiden Griffschalen zusammen und verschließt den Verschluss, wodurch der der Schutzgriff fest verschlossen am Einkaufswagenschiebestangengriffbereich anliegt, wodurch verhindert ist, dass der Schutzgriff sich ungewollt öffnet. Nun umgreift der Benutzer nur die Außenseiten des Schutzgriffes, ohne mit dem Gegenstand/ der Schiebestange in direkten Kontakt zu kommen, da der Schutzgriff wie eine Art Manschette um den Gegenstand/ die Schiebestange angebracht ist. Der Benutzer kann den Einkaufswagen nun benutzen, ohne mit der Schiebestange in direkten Kontakt zu kommen.

Dass wie allgemein bekannt ist, die Griffbereiche am Einkaufswagenschiebestangen, als auch die Griffbereiche von Türklinken deutlich in längsseitig gemessenen Längen als auch in ihrem am größten Punkt gemessenen Außendurchmesser variieren, ist die Länge und seinem engsten Punkt gemessen Innendurchmesser so gewählt, dass der Schutzgriff an möglichst vielen handelsüblichen Einkaufswagenschiebestangen und handelsüblichen Türklinken angewendet werden kann, was wiederum für den Benutzer wichtig ist, wenn er in verschiedenen Geschäften einkauft oder verschiedene Türklinken betätigen möchte und sich dabei mit dem Schutzgriff schützen möchte.

Beim Benutzen des Schutzgriffes am Einkaufswagen ist es sinnvoll, zwei Schutzgriffe zu benutzen, für jeden Hand einen Schutzgriff. Nach Beendigung des Einkaufs öffnet der Benutzer den Verschluss, wodurch wieder die Maulöffnung entsteht und hebt den Schutzgriff mit beiden Händen herunter und verschließt diesen zum Transport, somit ist gewährleistet, dass der Bediener nicht mit dem Innenbereich des Schutzgriffes in Kontakt kommt, denn an dem Innbereich können Viren, Bakterien jetzt haften.

Der Schutzgriff dient somit dem Schutz der Gesundheit des Benutzers.

Genauso verfährt der Benutzer beim Bedienen einer Türklinke, nur dass er diese nachdem er den Schutzgriff wie eine Manschette um die Türklinke gelegt hat, er den Schutzgriff greift und die Türklinke nach unten drückt und dann die Türklinke zu öffnen oder schließen kann. Zum Bedienen einer Türklinke benutzt der Benutzer nur einen Schutzgriff für eine Hand.

Der Schutzgriff ist so ausgebildet, dass er sich wie eine Art Manschette im geschlossenen Zustand um die in Länge und Durchmesser variierenden Griffbereiche der handelsüblichen Einkaufswagenschiebestangen oder auch handelsüblichen Türklinken legt, sodass der Endverbraucher den Schutzgriff an möglichst vielen handelsüblichen Einkaufwagenschiebestangen oder Türklinken einsetzen kann. Zum Bedienen einer Türklinke reicht ein Schutzgriff. Zum Schieben eines Einkaufswagens werden vorzugsweise zwei Schutzgriffe, in jeder Hand ein Schutzgriff, benutzt.

Der Schutzgriff ist aus einem oder mehreren Materialien hergestellt, die in einer Spülmaschine gereinigt werden können. Der Schutzgriff ist aus Kunststoff hergestellt. Die Griffschalen weisen vorzugsweise einen Kunststoff auf. Da der Schutzgriff aus Material/Materialien gefertigt ist, welche in der Spülmaschine zu reinigen sind, ist auch hier die Übertragungskette von Krankheiten unterbrochen, da der Benutzer den Schutzgriff nicht mit den Händen reinigen muss. Der Schutzgriff sollte auch einem Programm in der Spülmaschine gereinigt werden, welches Keime, Viren, Bakterien abtötet. Vorzugsweise ist der Schutzgriff in einem Spritz oder Druckgussverfahren herstellbar. Vorzugsweise sind die Teile des Schutzgriffs in einem Spritz- oder Druckgussverfahren herstellbar.

Eine Variante des Schutzgriffes ist, dass beide Griffschalen separate Teile sind, die über ein Gelenk oder mehrere Gelenke schwenkbeweglich verbunden sind. Es ist denkbar, dass die beiden Griffschalen separate Teile sind, die über ein Gelenk oder mehrere Gelenke, insbesondere ein oder mehrere Scharniere miteinander verbunden sind, wobei die Gelenke den Verbindungsbereich bilden.

Eine andere Variante ist, den schwenkbeweglichen Verbindungsbereich mit einer die beiden Griffschalen verbindenden Kunststofflippe auszubilden. Die beiden Griffschalen bilden dann gemeinsam mit der Kunststofflippe eine Baueinheit. Der Verbindungsbereich ist als eine flexible, die Griffschalen verbindende Kunststofflippe ausgebildet. Die Kunststofflippe minimiert die Gefahr, dass Viren oder Bakterien vom inneren des Schutzgriffes an seine Außenseite gelangen. Die beiden Griffschalen und der Verbindungsbereich bilden dabei eine Baueinheit. Als Kunststoffe können Duroplaste oder Thermoplaste verwendet werden.

Um ein Abrutschen über die Stirnseiten hinaus zu vermeiden, weist zumindest eine der Griffschalen einen ersten Endbegrenzungskragen und einen zweiten Endbegrenzungskragen auf, wobei zwischen den beiden Endbegrenzungskragen ein Griffbereich ausgebildet ist und der Durchmesser des Schutzgriffes im Griffbereich kleiner als der Durchmesser des Schutzgriffes an den Endbegrenzungskragen ist. Um ein Abrutschen über die Stirnseiten hinaus zu vermeiden, weist die erste Griffschale zumindest einen ersten und einen zweiten Endbegrenzungskragen auf, wobei zwischen den Endbegrenzungskragen ein Griffbereich ausgebildet ist und der Durchmesser des Schutzgriffes im Griffbereich kleiner als der Durchmesser des Schutzgriffes an den Endbegrenzungskragen ist. Hierdurch ist die Gefahr des Abrutschens vermieden. Ein Abrutschen könnte wiederum den Kontakt mit Viren oder Bakterien zur Folge haben, daher dienen die Endbegrenzungskragen ebenfalls dem Schutz vor Viren und Bakterien. Es weisen beide Griffschalen jeweils zwei Endbegrenzungskragen auf. In dieser anderen möglichen Variante weisen beide Griffschalen jeweils einen ersten und einen zweiten Endbegrenzungskragen auf. Der Durchmesser ist in radialer Richtung zu messen, wenn ein zylindrischer Gegenstand umgriffen wird.

Der Schutzgriff ist vorwiegend zum Greifen /Umgreifen von zylindrischen Gegenständen angepasst. Der Schutzgriff ist insbesondere zum Greifen von zylindrischen Gegenständen angepasst. Der Schutzgriff begrenzt dabei in seinem geschlossenen Zustand mit seinen Griffschalen eine Aufnahme und weist eine erste stirnseitige Öffnung an seiner ersten Stirnseite und eine zweite stirnseitige Öffnung an seiner zweiten Stirnseite auf. Die Innenwandungen der Griffschalen können insbesondere an das Greifen von zylindrischen Gegenständen angepasst sein.

Die erste Griffschale begrenzt dabei vorzugsweise eine halbzylindrische Aufnahme. Die erste Griffschale begrenzt dazu vorzugsweise eine halbzylinderförmige Aufnahme und weist insbesondere eine halbzylinderförmige Innenwandung auf. In einer möglichen Variante weist der Schutzgriff eine zweite Griffschale auf, welche ebenfalls eine halbzylindrische Aufnahme aufweist.

Die zweite Griffschale weist im Wesentlichen die Form eines U-Profils auf, wobei das U-Profil einen ersten Schenkel, einen Boden und einen zweiten Schenkel aufweist, wobei die zweite Griffschale über den ersten Schenkel mit der ersten Griffschale verbunden ist, wobei der Verschluss am zweiten Schenkel ausgebildet ist oder mit dem zweiten Schenkel zusammenwirkt. Diese Ausgestaltung hat den Vorteil, dass eine Vielzahl von Verschlüssen einsetzbar ist, da der zweite Schenkel eine ebene Fläche bereitstellt, an denen gut eine Rastverbindung, oder eine form- oder kraftschlüssige Verbindung eines Verschlusses angeordnet oder ausgebildet werden kann. Der Verschluss verhindert, dass die Griffschalen sich ungewollt öffnen. Vorzugsweise ist der Verschluss einhändig öffenbar und schließbar.

Es ist denkbar, dass der Verschluss eine schwenkbare Lasche aufweist, wobei die Lasche schwenkbar an der ersten Griffschale angeordnet ist. Die Lasche kann vorzugsweise über eine Rastverbindung mit der zweiten Griffschale verbunden werden. Die Lasche weist vorzugsweise einen Rastbereich auf, der im Wesentlichen hakenförmig ausgebildet ist. Die zweite Griffschale weist vorzugsweise einen Rastvorsprung auf, der mit dem hakenförmigen Rastbereich zusammenwirken kann.

Eine besonders einfache Ausgestaltung des Verschlusses ist dadurch realisiert, dass der Verschluss einen an der ersten Griffschale beweglich angeordneten Riegel aufweist, wobei der Riegel in einer Sperrposition derart an den beiden Längskantenbereichen anliegt, dass ein vollständiges Öffnen der Griffschalen verhindert ist. Der Riegel verschließt in der Sperrposition die beiden Griffschalen miteinander, so dass ein ungewolltes Öffnen der Griffschalen verhindert ist. Der Riegel liegt dabei außen an den Längskantenbereichen an. Wenn nun versehentlich versucht wird, die beiden Griffschalen auseinander zu schwenken, so bildet der Riegel einen Anschlag für die Griffschale, mit der der Riegel nicht beweglich verbunden ist.

In einer erfindungsgemäßen Ausgestaltung ist der Riegel schwenkbar an der ersten Griffschale angeordnet. Hierzu kann die erste Griffschale einen Stift oder eine Schraube oder dergleichen aufweisen, wobei der Riegel ein Auge aufweist, wobei der Riegel mit dem Auge den Stift oder die Schraube oder dgl. umgreift.

In einer weiteren erfindungsgemäßen Ausgestaltung ist der Riegel verschiebbar an der ersten Griffschale angeordnet. Der Riegel ist dabei insbesondere quer zur Längsrichtung des Schutzgriffes verschiebbar. Der Riegel kann beispielsweise durch eine Halterung geführt sein und in eine dafür vorgesehene Vorrichtung an der zweiten Griffschale einrasten.

Es gibt unterschiedliche Möglichkeiten, die Erfindung auszugestalten und weiterzubilden. Hierfür darf zunächst auf die dem Patentanspruch 1 nachgeordneten Patentansprüche verwiesen werden. Im Folgenden wird eine bevorzugte Ausgestaltung der Erfindung anhand der Zeichnung und der dazugehörigen Beschreibung näher erläutert. In der Zeichnung zeigt:

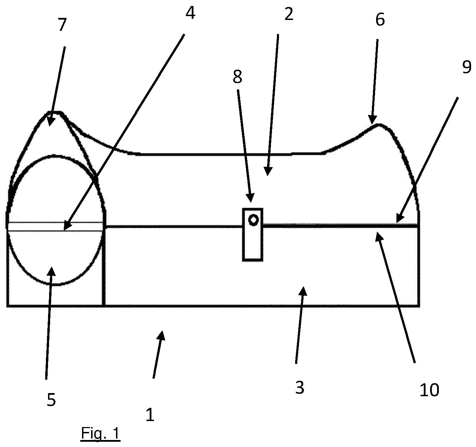

Fig. 1 in einer schematischen Darstellung einen Schutzgriff mit zwei Griffschalen in einer geschlossenen Stellung.

Es handelt sich um einen Schutzgriff 1 aus festem, Spülmaschinen geeignetem Kunststoff. Der Schutzgriff 1 kann in der Spülmaschine gereinigt werden.

Der Schutzgriff 1 weist zwei Griffschalen 2, 3, nämlich eine erste Griffschale 2 und eine zweite Griffschale 3 auf. Die Griffschalen 2, 3 sind über einen Verbindungsbereich in Form einer flexiblen Kunststofflippe 4 entlang ihrer rückwärtigen Längsseiten schwenkbeweglich miteinander verbunden. Die Griffschalen 2, 3 können zum Umgreifen von insbesondere zylindrischen Gegenständen genutzt werden (nicht dargestellt). Ein umgriffener Gegenstand ist in dieser Zeichnung nicht dargestellt.

Dazu begrenzen die Griffschalen 2, 3 im geschlossenen Zustand eine Aufnahme 5 und weisen endseitige Öffnungen auf. Die beiden Griffschalen 2, 3 begrenzen in einem geschlossenen Zustand eine Aufnahme 5 zum Umgreifen des Gegenstandes. In der Aufnahme 5 ist der Gegenstand im geschlossenen Zustand des Schutzgriffes 1 aufgenommen. Die Aufnahme 5 ist dabei durch die vorzugsweise jeweils halbzylindrischen Innenbereiche der Griffschalen 2, 3 gebildet.

Die Griffschalen 2, 3 können soweit auseinandergeklappt werden, dass sie einen Gegenstand, wie beispielsweise die Griffstange eines Einkaufswagens umgreifen können. Der Schutzgriff 1 bildet daher eine Art öffenbare und schließbare Manschette. Die obere Griffschale 2 ist im Wesentlichen halbröhrenförmig ausgebildet. Die untere Griffschale 3 kann in Form eines U- Profils ausgebildet sein.

An den stirnseitigen Enden sind zwei höher abstehenden Endbegrenzungen, die sogenannten Endbegrenzungskragen 6, 7 ausgebildet. Somit ist ein versehentliches Abrutschen der Hände auf den eigentlichen Einkaufswagengriff/ Türklinke verhindert.

Mittig an der oberen Griffschale 2, als auch an der unteren Griffschale 3 des so entstandenen Schutzgriffes 1 befindet sich außen ein Verschluss 8. Der Verschluss 8 übergreift im geschlossenen Zustand die freien Längskantenbereiche 9, 10. Der Verschluss 8 weist hier einen beweglichen, insbesondere schwenkbaren Riegel auf. Der Riegel ist schwenkbar mit der oberen Griffschale 2 verbunden. Vorzugsweise weist die obere Griffschale 2 im Bereich des Riegels eine ebene Fläche auf, insbesondere eine Mulde.

Der Schutzgriff 1 dient dem Anwender zum Schutz der Hände vor Viren, Bakterien und Keimen, da man ihn einfach und leicht an Einkaufwagenschiebestangengriffbereich/bereiche oder an Türklinken anbringen und verschliessen und benutzen kann, wobei dieser öffenbar und wiederverwendbar und in der Spülmaschine hygienisch reinigbar ist.

Einfache Bedienung und Wiederverwendbarkeit zeichnen den Schutzgriff 1 aus.

### Bezugszeichenliste

1 Schutzgriff für Einkaufwagen und Türklinken
2 erste Griffschale
3 zweite Griffschale
4 Schwenkbeweglicher Verbindungsbereich
5 Aufnahme
6 Endbegrenzungskragen
7 Endbegrenzungskragen
8 Verschluss in Form eines beweglichen Riegels
9 freier Längskantenbereich der ersten Griffschale
10 freier Längskantenbereich der zweiten Griffschale

## Patentansprüche

1. Schutzgriff (1) mit einer ersten Griffschale (2), mit einer zweiten Griffschale (3) und mit einem Verschluss (8), wobei die Griffschalen (2, 3) über einen Verbindungsbereich (4) schwenkbeweglich miteinander verbunden sind, wobei die Griffschalen (2, 3) zwei freie Längskantenbereiche (9, 10) aufweisen, wobei die freien Längskantenbereiche (9, 10) in einem geöffneten Zustand des Schutzgriffes (1) eine Maulöffnung zum Umgreifen von einem Gegenstand, nämlich zum Umgreifen von einer Einkaufwagenschiebestange oder einer Türklinke, bilden, wobei die beiden Griffschalen (2, 3)in einem geschlossenen Zustand eine Aufnahme (5) zum Umgreifen des Gegenstandes begrenzen, wobei in einem geschlossenen Zustand die Längskantenbereiche (9, 10) über den Verschluss (8) miteinander verbunden sind, wobei der Verschluss (8) an der ersten Griffschale (2) angeordnet ist und mit der zweiten Griffschale (3) zusammenwirkt, **dadurch gekennzeichnet, dass** der Schutzgriff (1) aus einem oder mehreren Materialien hergestellt ist, die in einer Spülmaschine hygienisch gereinigt werden können, wobei zumindest eine der Griffschalen (2, 3) einen ersten Endbegrenzungskragen (6) und einen zweiten Endbegrenzungskragen (7) aufweist, wobei zwischen den beiden Endbegrenzungskragen (6, 7) ein Griffbereich ausgebildet ist und der Durchmesser des Schutzgriffes (1) im Griffbereich kleiner als der Durchmesser des Schutzgriffes (1) an den Endbegrenzungskragen (6, 7) ist.

2. Schutzgriff nach Anspruch 1, **dadurch gekennzeichnet, dass** die erste Griffschale (2) eine halbzylinderförmige Aufnahme (5) begrenzt und insbesondere eine halbzylinderförmige Innenwandung aufweist.

3. Schutzgriff nach einem der vorstehenden Ansprüche, **dadurch gekennzeichnet, dass** die zweite Griffschale (3) im Wesentlichen die Form eines U-Profils aufweist, wobei das U-Profil einen ersten Schenkel, einen Boden und einen zweiten Schenkel aufweist, wobei die zweite Griffschale (3) über den ersten Schenkel mit der ersten Griffschale (2) verbunden ist, wobei der Verschluss (8) am zweiten Schenkel ausgebildet ist oder mit dem zweiten Schenkel zusammenwirkt.

4. Schutzgriff nach einem der vorstehenden Ansprüche, **dadurch gekennzeichnet, dass** der Schutzgriff (1) einen festen Kunststoff aufweist, welcher in der Spülmaschine gereinigt werden kann.

5. Schutzgriff nach einem der vorstehenden Ansprüche, **dadurch gekennzeichnet, dass** beide Griffschalen (2, 3) jeweils zwei Endbegrenzungskragen (6, 7) aufweisen.

6. Schutzgriff nach einem der vorstehenden Ansprüche, **dadurch gekennzeichnet, dass** der Verbindungsbereich (4) als eine flexible, die Griffschalen (2, 3) verbindende Kunststofflippe ausgebildet ist.

7. Schutzgriff nach einem der vorstehenden Ansprüche, **dadurch gekennzeichnet, dass** der Verbindungsbereich (4) durch ein oder mehrere Gelenke gebildet ist.

8. Schutzgriff nach einem der vorstehenden Ansprüche, **dadurch gekennzeichnet, dass** der Verschluss (8) einen beweglich an der ersten Griffschale (2) angeordneten Riegel aufweist, wobei der Riegel in einer Sperrposition derart an den beiden Längskantenbereichen anliegt, dass ein vollständiges Öffnen der Griffschalen (2, 3) verhindert ist

9. Schutzgriff nach Anspruch 8, **dadurch gekennzeichnet, dass** der Riegel schwenkbar an der ersten Griffschale (2) angeordnet ist.

10. Schutzgriff nach Anspruch 8, **dadurch gekennzeichnet, dass** der Riegel verschiebbar an der ersten Griffschale (2) angeordnet ist, wobei der Riegel quer zur Längsrichtung des Schutzgriffes (1) verschiebbar ist.
